# EUROPÄISCHE PATENTSCHRIFT

(11) **EP 2 283 233 B1**
(45) Veröffentlichungstag und Bekanntmachung des Hinweises auf die Patenterteilung: **05.10.2011**
(21) Anmeldenummer: 09741946.9
(22) Anmeldetag: 26.03.2009
(51) Int. Cl.: F03D 9/00, F03D 11/00

(54) **WINDENERGIEANLAGE UND WINDENERGIEPARK MIT EINER VIELZAHL VON WINDENERGIEANLAGEN**
WIND POWER PLANT AND WIND FARM COMPRISING PLURALITY OF WIND POWER PLANTS
PARC ÉOLIEN COMPRENANT PLUSIEURS INSTALLATIONS ÉOLIENNES

(30) Priorität: 07.05.2008 DE 102008022617
(43) Veröffentlichungstag der Anmeldung: 16.02.2011
(73) Patentinhaber: Siemens Aktiengesellschaft, 80333 München (DE)
(72) Erfinder: HILLER, Marc, 91207 Lauf an der Pegnitz (DE); KLAASSEN, Norbert, 91052 Erlangen (DE); SALZMANN, Theodor, 91080 Marloffstein (DE); SOMMER, Rainer, 91336 Heroldsbach (DE)
(86) Internationale Anmeldenummer: PCT/EP2009/053616
(87) Internationale Veröffentlichungsnummer: WO 2009/135728

(56) Entgegenhaltungen:
- WO-A1-97/45908
- WO-A1-03/025390
- WO-A1-2005/114830

## Beschreibung

Die Erfindung bezieht sich auf eine Windenergieanlage und einen aus diesen Windenergieanlagen bestehenden Windenergiepark.

Mittels Windenergieanlagen eines Windenergieparks soll mit dem stochastischen Primärenergieträger Wind erzeugte Elektroenergie in ein regionales Versorgungsnetz eingespeist werden.

Aus der DE 196 20 906 A1 ist ein bekanntes Konzept eines Windenergieparks 2 in der Figur 1 schematisch dargestellt. Dieses bekannte Konzept ist ein dezentrales Drehstrom-Konzept, weil die Energie einer jeden Windenergieanlage 4 des Windenergieparks 2 in ein regionales Versorgungsnetz 6 eingespeist wird. Da die Spannungsanhebung an einer Windenergiepark-Einspeisestelle 8 des regionalen Versorgungsnetzes 6 nicht mehr als 4% betragen darf, ergibt sich eine maximal mögliche Windenergieleistung in Abhängigkeit von der Entfernung der Windenergiepark-Einspeisestelle 8 von einem Umspannwerk dieses Versorgungsnetzes 6. Der dargestellte Windenergiepark 2 weist drei Windenergieanlagen 4 auf, die jeweils eine Gondel 12 und einen Turm 14 aufweisen. Die Gondel 12, die drehbar auf dem Turm 14 angeordnet ist, weist einen Generator 16, ein generatorseitiges Filter 18, einen generatorseitigen Stromrichter 20, einen netzseitigen Stromrichter 22, ein netzseitiges Filter 24 und einen Transformator 26 auf. Die beiden Stromrichter 20 und 22 sind gleichspannungsseitig mittels eines Spannungszwischenkreises miteinander elektrisch leitend verbunden. Somit bilden diese beiden Stromrichter 20 und 22 und der Spannungszwischenkreis einen Spannungszwischenkreis-Umrichter.

Ein Aufbau eines derartigen in einer Gondel 12 einer Windenergieanlage 4 angeordneten Spannungszwischenkreis-Umrichters ist der Veröffentlichung mit dem Titel "A high power density converter system fort the Gamesa G10x4,5 MW Wind turbine" von Björn Andresen und Jens Birk, veröffentlicht im Tagungsband der EPE 2007 in Aalborg. In diesem in dieser Veröffentlichung dargestellten Spannungszwischenkreis-Umrichter sind die beiden Stromrichter 20 und 22 als selbstgeführte Pulsstromrichter ausgeführt. Um vom Stromrichter 20 bzw. 22 erzeugte Oberschwingungen vom Generator 16 bzw. Versorgungsnetz 6 fernhalten zu können, sind generatorseitig und netzseitig jeweils ein Filter 18 bzw. 24 vorgesehen. Mittels des netzseitigen Transformators 26 wird eine generierte Umrichter-Ausgangsspannung an eine Nennspannung des regionalen Versorgungsnetzes angepasst.

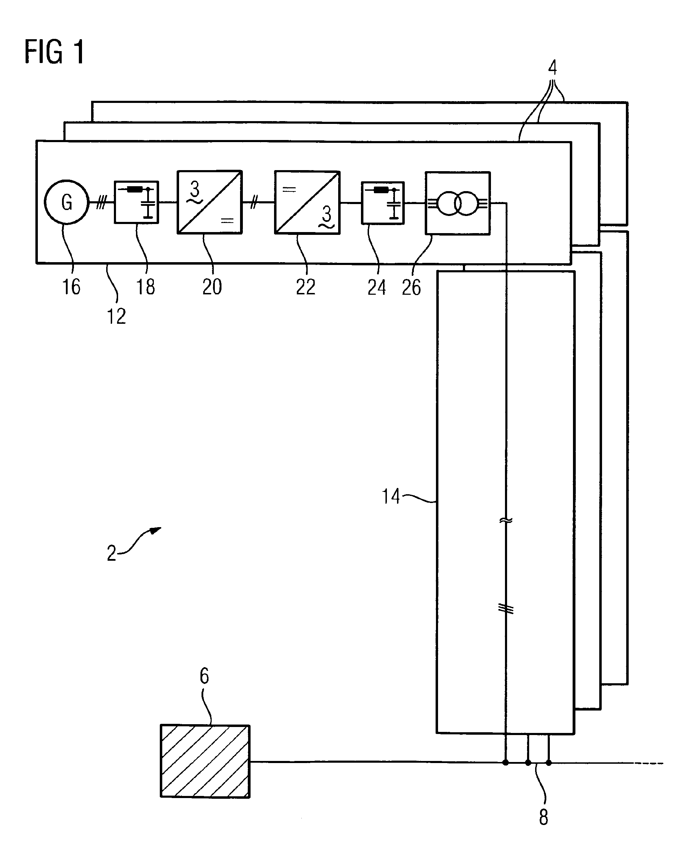

Wie der genannten Veröffentlichung zu entnehmen ist, ist der Generator 16 läuferseitig mittels eines Getriebes oder direkt mit einem Rotor der Windenergieanlage 4 verknüpft. Wird als Generator 16 ein Synchrongenerator verwendet, kann auf das Getriebe verzichtet werden, so dass sich das Gewicht der Gondel 12 verringert. Aus Übersichtlichkeitsgründen ist in dieser Figur 1 auf die Darstellung von Rotoren verzichtet worden.

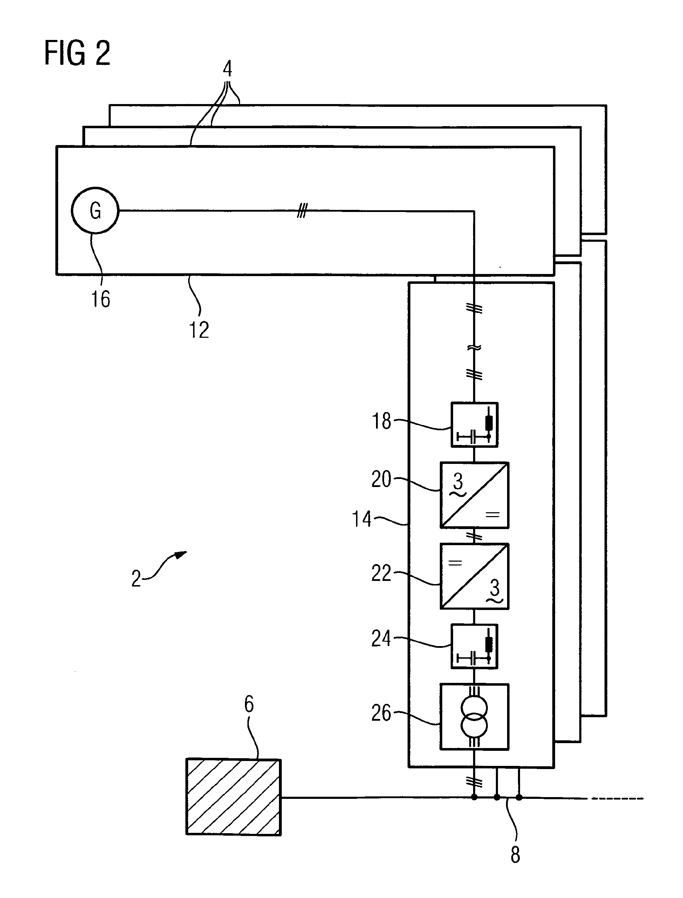

In der Figur 2 ist eine zweite Ausführungsform des Drehstrom-Konzepts eines Windenergieparks 2 dargestellt. Diese Ausführungsform unterscheidet sich von der Ausführungsform gemäß Figur 1 dadurch, dass die elektrische Ausrüstung einer Windenergieanlage 4 nicht mehr in der Gondel 12 sondern im Turm 14 angeordnet ist. Eine derartige Ausführungsform einer Windenergieanlage 4 ist aus der Veröffentlichung mit dem Titel "ABB Advanced Power Electronics - MV full power wind converter for Multibrid M5000 turbine", veröffentlicht im Internet auf der Seite www.abb.com/powerelectronics. Die Anlagenteile 18, 20, 22, 24 und 26 sind im Fußraum des Turms 14 einer Windenergieanlage 4 angeordnet. Somit verbleibt in der Gondel 12 einer jeden Windenergieanlage 4 eines Windenergieparks 2 nur noch der Generator 16.

Aus der DE 196 20 906 A1 ist ein Windenergiepark 2 mit n Windenergieanlagen 4 bekannt. Bei diesem bekannten Windenergiepark 2 weist jede Windenergieanlage 4 einen Rotor 28, dessen Rotorblätter verstellbar sind, einen Synchrongenerator 30, einen Gleichrichter 32 und eine Glättungsdrossel 34 auf. Der Synchrongenerator 30 ist direkt mit dem Rotor 28 gekoppelt und weist zwei 30° el. zu einander versetzte Statorwicklungen auf, die jeweils mit einem Teilgleichrichter 36 des Gleichrichters 32 elektrisch leitend verbunden sind. Der Synchrongenerator 30 kann eine Permanenterregung oder eine spannungsgeregelte Erregung aufweisen. Der Gleichrichter 32 ist mehrpulsig, beispielsweise 12-pulsig, ausgeführt. Die Glättungsdrossel 34 ist beispielsweise in einer positiven Ausgangsleitung 38 angeordnet. Diese positive Ausgangsleitung 38 und eine negative Ausgangsleitung 40 sind jeweils mittels eines Leistungsschalters 42 von einer positiven und negativen Sammelschiene 44 und 46 trennbar. Mittels dieser beiden Sammelschienen 44 und 46 sind die n Windenergieanlagen des Windenergieparks 2 gleichstromseitig parallel geschaltet.

Eine netzseitige Stromrichterstation 48 ist bei dieser Darstellung des Gleichstrom-Konzepts des Windenergieparks 2 direkt bei einem Umspannwerk 50 eines regionalen Versorgungsnetzes 6 angeordnet. Diese netzseitige Stromrichterstation 48 weist eine Glättungsdrossel 52, einen Wechselrichter 54, einen Anpasstransformator 56 und ein Filter 58 auf. Der Wechselrichter 54 besteht ebenso wie der Gleichrichter 32 einer jeden Windenergieanlage 4 aus zwei Teilwechselrichtern 60. Die Pulsigkeit des Wechselrichters 54 entspricht der Pulsigkeit des Gleichrichters 32. Jeder Teilwechselrichter 60 ist wechselspannungsseitig mit einer Sekundärwicklung des Anpasstransformators 56 elektrisch leitend verbunden, wobei dessen Primärwicklung mit einer Sammelschiene 62 des Umspannwerks 50 elektrisch leitend verbunden ist. An dieser Sammelschiene 62 ist ebenfalls das Filter 58 angeschlossen. Die Glättungsdrossel 52 ist beispielsweise in einer positiven Eingangsleitung 64 des Wechselrichters 54 angeordnet. Die positive Eingangsleitung 64 und eine negative Eingangsleitung 66 sind mittels einer Gleichstrom-Übertragungseinrichtung 68 mit der positiven und negativen Sammelschiene 44 und 46 der elektrisch parallel geschalteten Windenergieanlagen 4 elektrisch leitend verbunden. Die Gleichstrom-Übertragungseinrichtung 68 kann einerseits zwei Gleichstromleitungen oder ein Gleichstromkabel sein.

Als Stromrichterventile der Gleichrichter 32 einer jeden Windenergieanlage 4 und des Wechselrichters 54 des der netzseitigen Stromrichterstation 48 sind Thyristoren vorgesehen. Mit den Gleichrichtern 32 wird eine Leistung geregelt, wobei mittels des Wechselrichters 54 die Drehstromspannung geregelt wird. Diese Verschaltung von n Stromrichterstationen entspricht einem HGÜ-Mehrpunktnetz.

Aus der Veröffentlichung mit dem Titel "Offen für Offshore - HVDC Light - Baustein einer nachhaltigen elektrischen Energieversorgung" ist ein Offshore Windpark bekannt, wobei anstelle eines Drehstromkabels ein Gleichstromkabel verwendet wird. An beiden Enden dieses Gleichstromkabels ist jeweils ein Leistungsstromrichter vorgesehen, die wechselspannungsseitig jeweils mit einem Leistungstransformator versehen sind. Als Leistungsstromrichter sind IGBT-Stromrichter vorgesehen, die aus einem Spannungszwischenkreis-Umrichter für Mittelspannung bekannt sind. Der Zwischenkreiskondensator ist zweigeteilt und jeweils Gleichspannungsanschlüssen eines IGBT-Stromrichters elektrisch parallel geschaltet. Jeweils eine Windenergieanlage dieses Windenergieparks weist einen generatorseitigen IGBT-Stromrichter auf, wobei deren netzseitigen IGBT-Stromrichter in einem IGBT-Stromrichter einer netzseitigen Stromrichterstation integtiert sind. Die IGBT-Stromrichter der Windenergieanlagen dieses Windenergieparks sind gleichspannungsseitig mittels eines Gleichstromkabels mit dem IGBT-Stromrichter der netzseitigen Stromrichterstation verbunden. Mit diesem Gleichstromkonzept können die Windenergieanlagen eines Windenergieparks, insbesondere eines Offshore-Windparks, von einer netzseitigen Stromrichterstation mehr als 140km entfernt sein.

Aus der Veröffentlichung mit dem Titel "Control method and snubber selection for a 5MW wind turbine single active bridge DC/DC converter" von Lena Max und Torbjörn Thiringer, abgedruckt im Konferenzband EPE 2007 in Aalborg, ist eine weitere Ausführungsform eines Gleichspannungs-Konzeptes eines Windenergieparks bekannt. Bei dieser Ausführungsform weist jede Windenergieanlage einen Generator, einen generatorseitigen Stromrichter und einen Gleichspannungswandler auf. Mehrere Windenergieanlagen sind mittels eines weiteren Gleichspannungswandlers mit einem Gleichspannungswandler verknüpft, der mittels eines Gleichstromkabels mit einem netzseitigen Wechselrichter an einer Windpark-Einspeisestelle eines regionalen Versorgungsnetzes verbunden ist. Als generatorseitiger Stromrichter einer jeden Windenergieanlage wird entweder ein Diodengleichrichter oder ein selbstgeführter IGBT-Stromrichter vorgesehen.

Der Erfindung liegt nun die Aufgabe zugrunde, eine Windenergieanlage und einen aus diesen Windenergieanlagen bestehenden Windenergiepark derart zu verbessern, dass Anlagenteile eingespart werden können.

Diese Aufgabe wird erfindungsgemäß mit den kennzeichnenden Merkmalen des Anspruchs 1 bzw. des Anspruchs 8 gelöst.

Erfindungsgemäß wird als netzseitiger Stromrichter einer Windenergieanlage ein Stromrichter mit verteilten Energiespeichern vorgesehen. Jeder Ventilzweig eines derartigen Stromrichters weist wenigstens zwei zweipolige Subsysteme auf, die jeweils einen Energiespeicher aufweisen und elektrisch in Reihe geschaltet sind. Um das Ausgangsfilter einsparen zu können, werden wenigstens zehn zweipolige Subsysteme pro Ventilzweig elektrisch in Reihe geschaltet. Abhängig von der Anzahl der zweipoligen Subsysteme steigt ebenfalls eine Stromrichter-Ausgangsspannung an. Dadurch kann gegebenenfalls auf einen Anpasstransformator verzichtet werden.

Ein weiterer Vorteil dieses Stromrichters mit verteilten Energiespeichern besteht darin, dass jeder Ventilzweig dieses Stromrichters redundante zweipolige Subsysteme aufweisen kann. Dadurch kann bei fehlerhaften zweipoligen Subsystemen der Betrieb uneingeschränkt aufrechterhalten werden, wodurch sich die Verfügbarkeit der Windenergieanlage verbessert.

Da als lastseitiger Stromrichter eines Spannungszwischenkreis-Umrichters ein Stromrichter mit verteilten Energiespeichern vorgesehen ist, weist der Spannungszwischenkreis dieses Spannungszwischenkreis-Umrichters keine Energiespeicher mehr auf. Dadurch muss dieser Spannungszwischenkreis nicht mehr niederinduktiv aufgebaut werden, so dass als gleichspannungsseitige Verbindung des generatorseitigen Stromrichters mit dem netzseitigen Stromrichter einer Windenergieanlage ein Gleichstromkabel verwendet werden kann. Außerdem wird ein Zwischenkreiskurzschluss im Vergleich zu einem Spannungszwischenkreis-Umrichter mit Energiespeicher im Spannungszwischenkreis sehr unwahrscheinlich, wodurch ein sicheres Verhalten im Fehlerfall gewährleistet werden kann. Ferner müssen die Stromrichterventile des generatorseitigen Stromrichters des Spannungszwischenkreis-Umrichters der Windenergieanlage nicht mehr für einen durch einen niederohmigen ZwischenkreisKurzschluss hervorgerufenen Kurzschlussstrom ausgelegt werden. Das heißt, die i²t-Anforderung dieser Stromrichterventile kann deutlich reduziert werden.

Wird mit einer Vielzahl von erfindungsgemäßen Windenergieanlagen ein Windenergiepark aufgebaut, so werden die netzseitigen Stromrichter mit verteilten Energiespeichern einer jeden Windenergieanlage in einem Stromrichter mit verteilten Energiespeichern in einer netzseitigen Stromrichterstation zusammengefasst, wobei diese netzseitige Stromrichterstation vorteilhafterweise unmittelbar bei einer Windenergiepark-Einspeisestelle angeordnet ist. Somit weist jede Windenergieanlage des Windenergieparks nach der Erfindung nur noch einen Generator mit nachgeschaltetem Stromrichter auf, wobei vorteilhafterweise dieser generatorseitige Stromrichter im Fußraum eines Turms einer jeden Windenergieanlage angeordnet ist. Dadurch reduziert sich das Gewicht einer jeden Gondel der Windenergieanlage des erfindungsgemäßen Windenergieparks wesentlich. Dadurch vereinfacht sich außerdem die Konstruktion eines Turms einer jeden Windenergieanlage dieses Windenergieparks.

Bei einer vorteilhaften Ausführungsform der erfindungsgemäßen Windenergieanlagen ist als generatorseitiger Stromrichter außerdem ein Stromrichter mit verteilten Energiespeichern vorgesehen. Durch die Verwendung eines Stromrichters mit verteilten Energiespeichern auf der Generatorseite des Spannungszwischenkreis-Umrichters der Windenergieanlage, wobei eine Vielzahl von zweipoligen Subsystemen pro Ventilzweig des Stromrichters verwendet werden, kann als Generator ein Generator mit verminderten Anforderungen an die Wicklungsisolation verwendet werden. Durch die dünnere Isolation der Wicklungen des Generators verbessert sich deren Kühlung.

Weitere vorteilhafte Ausführungsformen der Windenergieanlage sind den Unteransprüchen 4 bis 7 und weitere vorteilhafte Ausführungsformen des Windenergieparks sind den Unteransprüchen 9 bis 14 zu entnehmen.

Zur weiteren Erläuterung der Erfindung wird auf die Zeichnung Bezug genommen, in der mehrere Ausführungsformen einer Windenergieanlage eines Windenergieparks schematisch veranschaulicht sind.
- FIG 1: zeigt eine erste Ausführungsform eines bekannten Drehstrom-Konzeptes einer Windenergieanlage, in der
- FIG 2: ist eine zweite Ausführungsform des bekannten Dreh- strom-Konzeptes nach Figur 1 dargestellt, die

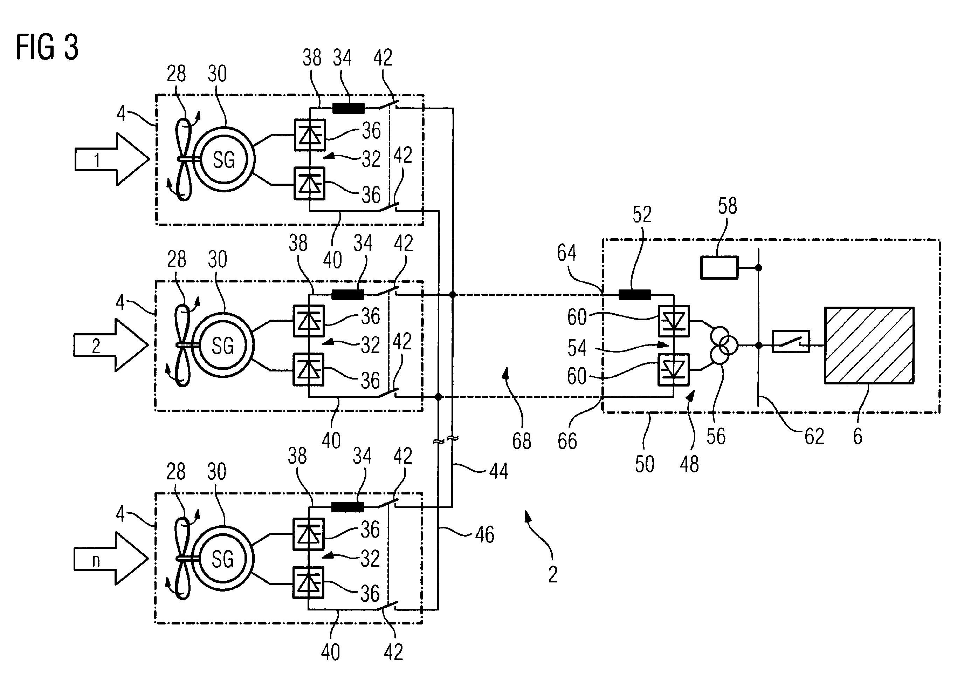

- FIG 3: zeigt eine Ausführungsform eines bekannten Gleich- strom-Konzeptes eines Windenergieparks, wobei in der
- FIG 4: eine erste Ausführungsform einer Windenergieanlage nach der Erfindung dargestellt ist, die
- FIG 5: zeigt ein Schaltbild eines Stromrichters mit ver- teilten Energiespeichern, in den
- FIG 6, 7: sind jeweils eine Ausführungsform eines zweipoligen Subsystems des Stromrichters nach Figur 5 veran- schaulicht, die
- FIG 8: zeigt eine zweite Ausführungsform einer erfindungs- gemäßen Windenergieanlage eines Windenergieparks, und die
- FIG 9: zeigt eine dritte Ausführungsform einer erfindungs- gemäßen Windenergieanlage dieses Windenergieparks.

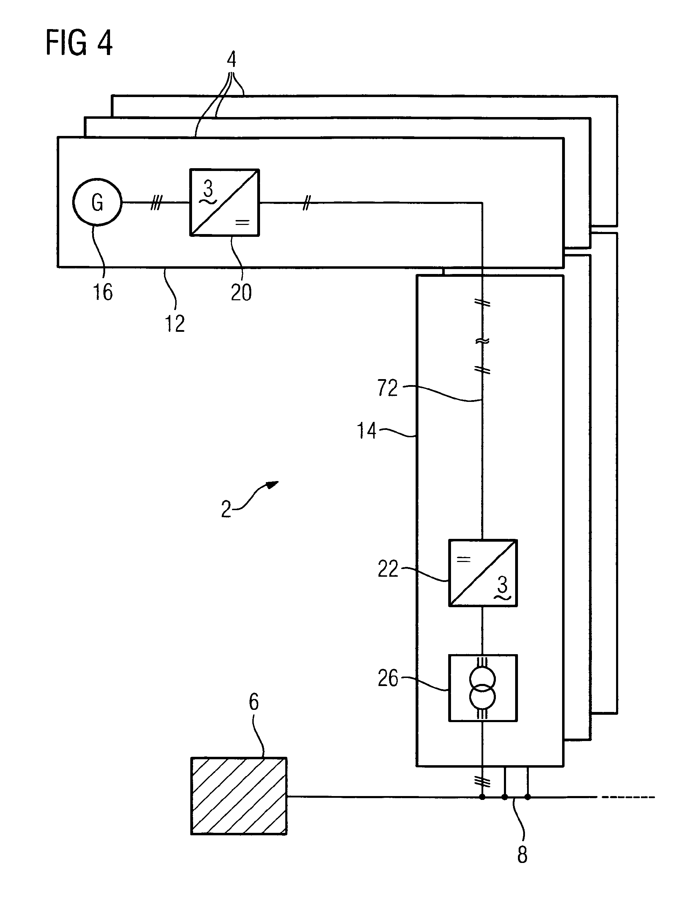

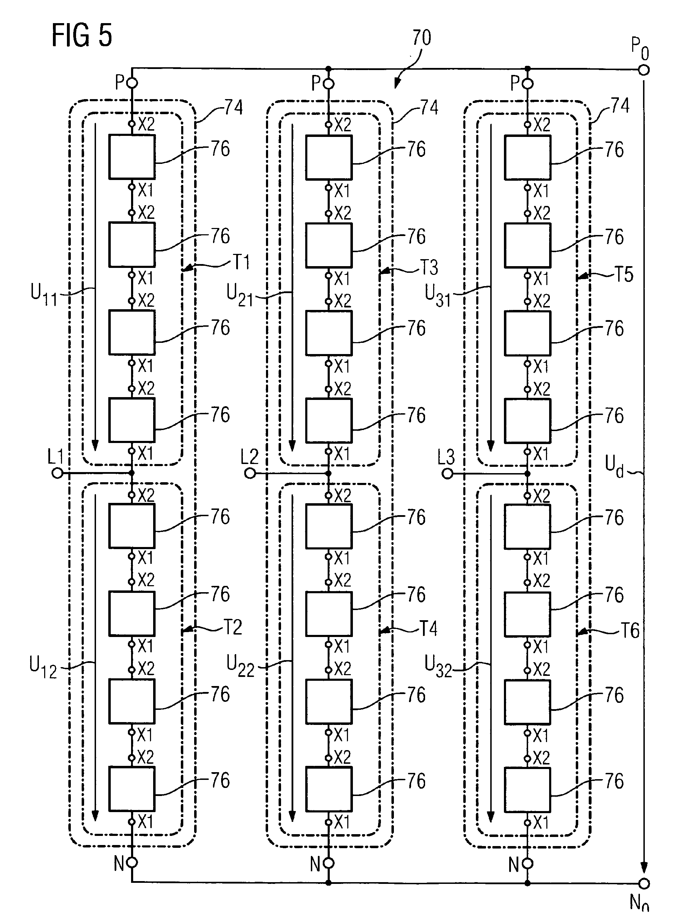

In der Figur 4 ist eine erste Ausführungsform einer erfindungsgemäßen Windenergieanlage 4 eines Windenergieparks 2 näher dargestellt. Bei dieser erfindungsgemäße Windenergieanlage 4 sind in seiner Gondel 12 nur noch der Generator 16 und der generatorseitige Stromrichter 20 angeordnet. Im zugehörigen Turm 14 dieser Windenergieanlage 4, auf dem die Gondel 12 drehbar gelagert ist, sind der netzseitige Stromrichter 22 und der wechselstromseitige Transformator 26, der auch als Anpasstransformator bezeichnet wird, angeordnet. Dabei sind diese beiden Anlagenteile 22 und 26 im Fußraum des Turms 14 angeordnet. Mit diesem Transformator 26 ist die Windenergieanlage 4 an der Windenergiepark-Einspeisestelle 8 eines regionalen Versorgungsnetzes 6 angeschlossen. Als netzseitiger Stromrichter 22 ist erfindungsgemäß ein Stromrichter 70 mit verteilten Energiespeichern vorgesehen. Ein Schaltbild eines derartigen Stromrichters 70 ist in Figur 5 näher dargestellt. Durch die Verwendung eines Stromrichters 70 mit verteilten Energiespeichern wenigstens als netzseitiger Stromrichter 22 weist der Spannungszwischenkreis des aus generatorseitigen und netzseitigen Stromrichtern 20 und 22 aufgebauter Spannungszwischenkreis-Umrichter keine Energiespeicher in Form von Kondensatoren, insbesondere Elektrolytkondensatoren, mehr auf. Aus diesem Grund muss dieser Spannungszwischenkreis nicht mehr niederinduktiv aufgebaut werden, so dass als gleichspannungsseitige Verknüpfung dieser beiden Stromrichter 20 und 22 ein Gleichstromkabel 72 vorgesehen wird. Der generatorseitige Stromrichter 20 ist im einfachsten Fall ein Diodengleichrichter. Vorteilhafterweise ist der generatorseitige Stromrichter als Vier-Quadranten-Stromrichter ausgebildet.

Wird als generatorseitiger Stromrichter 20 ebenfalls ein Stromrichter 70 mit verteilten Energiespeichern verwendet, so kann ein Generator 16 mit verminderten Anforderungen an die Wicklungsisolation verwendet werden. Dadurch verbessert sich die Kühlung der Wicklungen dieses Generators 16. Weist dieser generatorseitige Stromrichter 20 in der Ausführungsform als Stromrichter 70 mit verteilten Energiespeichern eine hohe Anzahl von verteilten Energiespeichern auf, beispielsweise wenigstens zehn Energiespeicher pro Ventilzweig eines Phasenmoduls dieses Stromrichters 70, so wird das generatorseitige Filter 18 nicht mehr benötigt. Außerdem können dadurch höhere Generatorspannungen realisiert werden, wodurch die Leitungen des Gleichstromkabels 72 im Turm 14 einer jeden Windenergieanlage 4 für kleinere Ströme ausgelegt werden kann. Ebenso kann dieser generatorseitige Stromrichter 70 mit verteilten Energiespeichern weitere redundante Energiespeicher aufweisen, die zur höheren Verfügbarkeit der Windenergieanlage 4 führt.

In Figur 5 ist ein Schaltbild eines Stromrichters 70 mit verteilten Energiespeichern dargestellt. Dieser Stromrichter 70 weist drei Phasenmodule 74 auf, die gleichspannungsseitig elektrisch parallel geschaltet sind. Für die Parallelschaltung dieser Phasenmodule 74 sind eine positive und eine negative Gleichspannungs-Sammelschiene P₀ und N₀ vorgesehen. Zwischen diesen beiden Gleichspannungs-Sammelschienen P₀ und N₀ fällt eine Gleichspannung U_{d} ab. An diesen Gleichspannungs-Sammelschienen P₀ und N₀ dieses Stromrichters 70 sind die beiden Leitungen des Gleichstromkabels 72 angeschlossen.

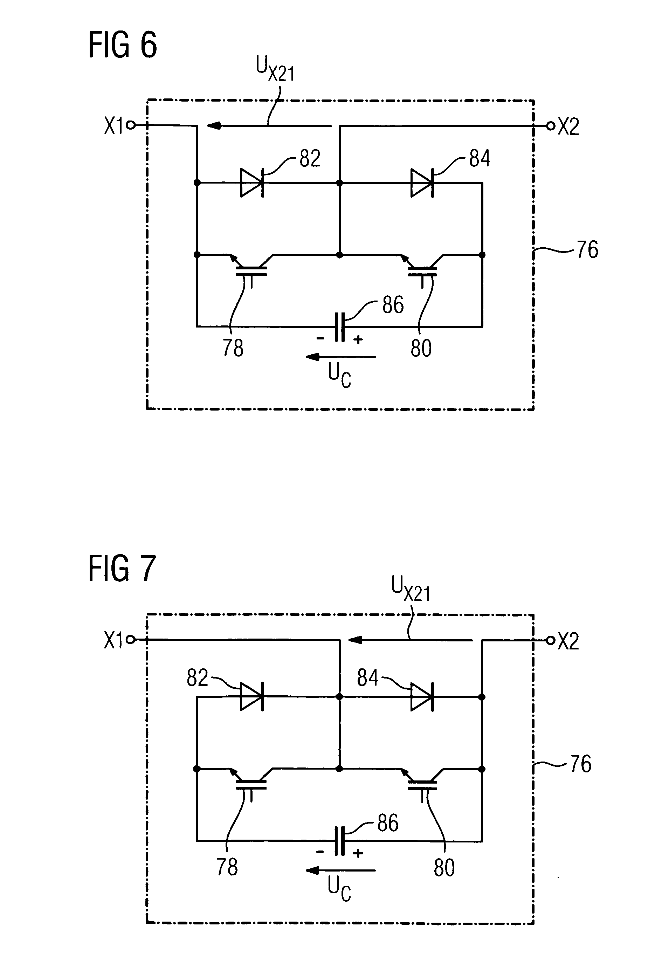

In der Figur 6 ist eine erste Ausführungsform eines zweipoligen Subsystems 76 dargestellt. Dieses zweipolige Subsystem 76 weist zwei abschaltbare Halbleiterschalter 78 und 80, zwei Dioden 82 und 84 und einen unipolaren Speicherkondensator 86 auf. Die beiden abschaltbaren Halbleiterschalter 78 und 80 sind elektrisch in Reihe geschaltet, wobei diese Reihenschaltung elektrisch parallel zum Speicherkondensator 86 geschaltet ist. Jedem abschaltbaren Halbleiterschalter 78 und 80 ist eine der beiden Dioden 82 und 84 derart elektrisch parallel geschaltet, dass diese zum korrespondierenden abschaltbaren Halbleiterschalter 78 und 80 antiparallel geschaltet ist. Der unipolare Speicherkondensator 84 des zweipoligen Subsystems 76 besteht entweder aus einem Kondensator oder einer Kondensatorbatterie aus mehreren solchen Kondensatoren mit einer resultierenden Kapazität C₀. Der Verbindungspunkt von Emitter des abschaltbaren Halbleiterschalters 78 und Anode der Diode 82 bilden eine erste Anschlussklemme X1 des Subsystems 76. Der Verbindungspunkt der beiden abschaltbaren Halbleiterschalter 78 und 80 und der beiden Dioden 82 und 84 bilden eine zweite Anschlussklemme X2 des zweipoligen Subsystems 76.

In der Ausführungsform des Subsystems 76 gemäß Figur 7 bildet dieser Verbindungspunkt die erste Anschlussklemme X1. Der Verbindungspunkt von Drain des abschaltbaren Halbleiterschalters 80 und Kathode der Diode 84 bildet die zweite Anschlussklemme X2 des zweipoligen Subsystems 76.

Gemäß der Veröffentlichung mit dem Titel "Modulares Stromrichterkonzept für Netzkupplungsanwendung bei hohen Spannungen" von Rainer Marquardt, Anton Lesnicar und Jürgen Hildinger, abgedruckt im Tagungsband der ETG-Tagung 2002, kann das zweipolige Subsystem 76 drei Schaltzustände einnehmen. Im Schaltzustand I ist der abschaltbare Halbleiterschalter 78 eingeschaltet und der abschaltbare Halbleiterschalter 80 ausgeschaltet. In diesem Schaltzustand I ist die Klemmenspannung U_{X21} des zweipoligen Subsystems 76 gleich Null. Im Schaltzustand II sind der abschaltbare Halbleiterschalter 78 ausgeschaltet und der abschaltbare Halbleiterschalter 80 eingeschaltet. In diesem Schaltzustand II ist die Klemmenspannung U_{X21} des zweipoligen Subsystems 76 gleich der Spannung U_{C} am Speicherkondensator 86. Im normalen, störungsfreien Betrieb werden nur diese beiden Schaltzustände I und II genutzt. Im Schaltzustand III sind beide abschaltbaren Halbleiterschalter 78 und 80 ausgeschaltet.

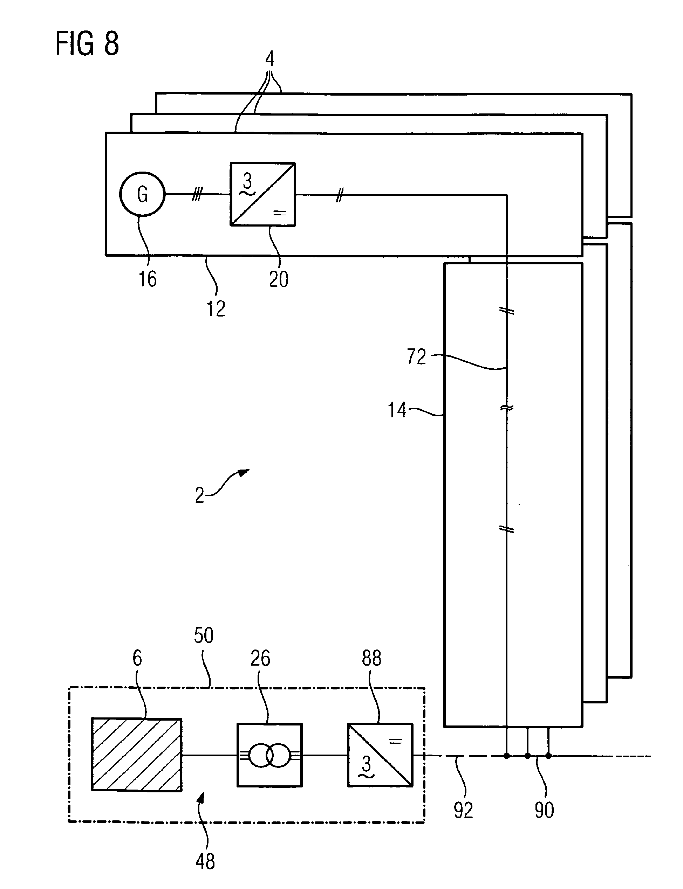

In der Figur 8 ist eine zweite Ausführungsform einer erfindungsgemäßen Windenergieanlage 4 eines Windenergieparks 2 näher dargestellt. Diese Ausführungsform unterscheidet sich von der ersten Ausführungsform gemäß Figur 4 dadurch, dass für alle Windenergieanlagen 4 dieses Windenergieparks 2 ein netzseitiger Stromrichter 88 mit wechselspannungsseitigem Transformator 26 vorgesehen ist, der in der netzseitigen Stromrichterstation 48 im Umspannwerk 50 eines regionalen Versorgungsnetzes 6 angeordnet ist. Das heißt, dass die netzseitigen Stromrichter 22 der Windenergieanlagen 4 eines Windenergieparks 2 in diesem netzseitigen Stromrichter 88 der Stromrichterstation 48 vereint sind. Dadurch sind die Windenergieanlagen 4 des Windenergieparks 2 nicht mehr wechselspannungsseitig mit der Windenergiepark-Einspeisestelle 8, sondern gleichspannungsseitig mit einer Windenergiepark-Einspeisestelle 90 verkoppelt. Somit ist jedes Gleichstromkabel 70 einer jeden Windenergieanlage 4 mittels der Windenergiepark-Einspeisestelle 90 mittels eines weiteren Gleichstromkabels 92 mit der netzseitigen Stromrichterstation 48 verknüpft. Dieses Gleichstromkabel 92 kann mehrere 100km lang sein. Das heißt, dass die Errichtung eines Windenergieparks 2 nicht mehr vom Ort einer Netzeinspeisestelle abhängig ist. Allein die Windverhältnisse sind ausschlaggebend. Außerdem kann mittels des Gleichstromkabels 92 ein Offshore-Windpark an ein regionales Versorgungsnetz an Land angebunden werden.

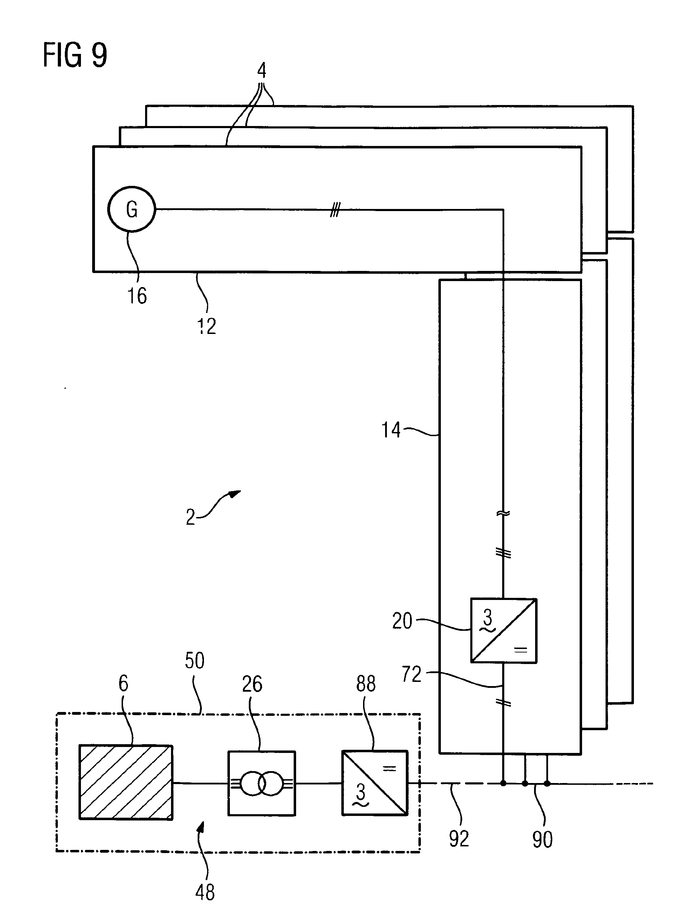

In der Figur 9 ist eine dritte Ausführungsform einer erfindungsgemäßen Windenergieanlage 4 eines Windenergieparks 2 näher dargestellt. Diese dritte Ausführungsform unterscheidet sich von der zweiten Ausführungsform gemäß Figur 8 dadurch, dass der generatorseitige Stromrichter 20 einer jeden Windenergieanlage 4 dieses Windenergieparks 2 von der Gondel 12 in den Fußraum des zugehörigen Turms 14 verlegt worden ist. Dadurch beheimatet die Gondel 12 einer jeden Windenergieanlage 4 des Windenergieparks 2 nur noch den Generator 16 und gegebenenfalls ein Getriebe, auf das ebenfalls verzichtet werden kann, wenn als Generator 16 ein permanenterregter Synchrongenerator verwendet wird. Dadurch reduziert sich das Gewicht der Gondel 12 einer Windenergieanlage 4 erheblich. Mit der Gewichtsreduzierung der Gondel 12 vereinfacht sich ebenfalls die Konstruktion seines Turms 14, auf dem die Gondel 12 drehbar gelagert ist. Somit reduzieren sich die Kosten einer Windenergieanlage 4 und damit die eines Windenergieparks 2, der mit diesen Windenergieanlagen 4 aufgebaut ist.

Durch die Verwendung eines Stromrichters 70 mit verteilten Energiespeichern jeweils als netzseitiger Stromrichter 22 einer jeden Windenergieanlage 4 bzw. auch als generatorseitiger Stromrichter 20 einer solchen Windenergieanlage 4 oder als netzseitiger Stromrichter 88 einer netzseitigen Stromrichterstation 48 eines Windenergieparks 2 erhält man ein Gleichstrom-Konzept, das gegenüber den bekannten Gleichstrom-Konzepten einen flexibleren Aufbau aufweist, wodurch dieses sich an die Wünsche der Betreiber eines Windenergieparks 2 einfacher anpassen lässt. Außerdem verringern sich die Kosten eines derartigen Windenergieparks 2 erheblich. Ferner kann eine längere Distanz zwischen Windenergiepark 2 und einem Umspannwerk 50 eines regionalen Versorgungsnetzes 6 vorgesehen sein, wodurch die Wahl eines Aufstellortes eines Windenergieparks 2 nur von einer stochastischen Windverteilung abhängig ist.

## Patentansprüche

1. Windenergieanlage (4), bestehend aus einer auf einem Turm (14) angeordneten Gondel (12), mit einem Rotor (28), einem Generator (16), einem generatorseitigen Stromrichter (20), einem netzseitigen Stromrichter (22) und einem Transformator (26), wobei diese beiden Stromrichter (20, 22) gleichspannungsseitig elektrisch miteinander verbunden sind, und wobei der netzseitige Stromrichter (22) wechselspannungsseitig mittels des Transformators (26) mit einer Einspeisestelle (8) eines energieaufnehmenden Netzes (6) verknüpft ist,
**dadurch gekennzeichnet, dass** jedes Phasenmodul (74) des netzseitigen Stromrichters (22) einen oberen und unteren wenigstens zwei elektrisch in Reihe geschaltete zweipolige Subsysteme (76) aufweisenden Ventilzweig (T1, T3, T5; T2, T4, T6) aufweist, und
dass der generatorseitige Stromrichter (20) und der netzseitige Stromrichter (22) gleichspannungsseitig mittels eines Gleichstromkabels (72) miteinander verknüpft sind.

2. Windenergieanlage (4) nach Anspruch 1,
**dadurch gekennzeichnet, dass** als generatorseitiger Stromrichter (20) ein Diodengleichrichter vorgesehen ist.

3. Windenergieanlage (4) nach Anspruch 1,
**dadurch gekennzeichnet, dass** jedes Phasenmodul (74) des generatorseitigen Stromrichters (20) einen oberen und unteren wenigstens zwei elektrisch in Reihe geschaltete zweipolige Subsysteme (76) aufweisenden Ventilzweig (T1, T3, T5; T2, T4, T6) aufweist.

4. Windenergieanlage (4) nach einem der vorgenannten Ansprüche, **dadurch gekennzeichnet, dass** jedes zweipolige Subsystem (76) zwei elektrisch in Reihe geschaltete abschaltbare Halbleiterschalter (78, 80) und einen Speicherkondensator (86) aufweist, wobei diese Reihenschaltung elektrisch parallel zum Speicherkondensator (86) geschaltet ist, wobei ein Verbindungspunkt der beiden abschaltbaren Halbleiterschalter (78, 80) eine Anschlussklemme (X2, X1) des zweipoligen Subsystems (76) bildet und wobei ein Pol des Speicherkondensators (86) eine weitere Anschlussklemme (X1, X2) dieses zweipoligen Subsystems (76) bildet.

5. Windenergieanlage (4) nach Anspruch 4,
**dadurch gekennzeichnet, dass** als abschaltbarer Halbleiterschalter (78, 80) ein Insulated Gate Bipolar Transistor (IGBT)vorgesehen ist.

6. Windenergieanlage (4) nach einem der vorgenannten Ansprüche, **dadurch gekennzeichnet, dass** der netzseitige Stromrichter (22) mit wechselspannungsseitigem Transformator (26) im Turm (14) der Windenergieanlage (4) angeordnet sind.

7. Windenergieanlage (4) nach einem der Ansprüche 1 bis 5,
**dadurch gekennzeichnet, dass** der generatorseitige Stromrichter (20) mit dem wechselspannungsseitigen Generator (16) in der Gondel (12) der Windenergieanlage (4) angeordnet sind.

8. Windenergiepark (2) mit wenigstens zwei Windenergieanlagen (4), die jeweils einen Rotor (28), einen Generator (16), einen generatorseitigen Stromrichter (20) aufweisen, und mit einer netzseitigen Stromrichterstation (48), die einen selbstgeführten Stromrichter (88) mit einem wechselspannungsseitig nachgeschalteten Transformator (26) aufweist, wobei diese Windenergieanlagen (4) und die netzseitige Stromrichterstation (48) gleichspannungsseitig miteinander verknüpft sind, **dadurch gekennzeichnet, dass** jedes Phasenmodul (76) des selbstgeführten Stromrichters (88) der netzseitigen Stromrichterstation (48) einen oberen und unteren wenigstens zwei elektrisch in Reihe geschaltete zweipolige Subsysteme (76) aufweisenden Ventilzweig (T1, T3, T5; T2, T4, T6) aufweist, und dass der generatorseitige Stromrichter (20) und der selbstgeführte Stromrichter (88) der netzseitigen Stromrichterstation (48) mittels Gleichstromkabel (72, 92) miteinander verknüpft sind.

9. Windenergiepark (2) nach Anspruch 8,
**dadurch gekennzeichnet, dass** als generatorseitiger Stromrichter (22) einer jeden Windenergieanlage (4) jeweils ein Diodengleichrichter vorgesehen ist.

10. Windenergiepark (2) nach Anspruch 8,
**dadurch gekennzeichnet, dass** jedes Phasenmodul (76) eines generatorseitigen Stromrichters (20) einer jeden Windenergieanlage (4) einen oberen und unteren wenigstens zwei elektrisch in Reihe geschaltete zweipolige Subsysteme (76) aufweisenden Ventilzweig (T1, T3, T5; T2, T4, T6) aufweist.

11. Windenergiepark (2) nach einem der Ansprüche 8 bis 10,
**dadurch gekennzeichnet, dass** jedes zweipolige Subsystem (76) zwei elektrisch in Reihe geschaltete abschaltbare Halbleiterschalter (78, 80) und einen Speicherkondensator (86) aufweist, wobei diese Reihenschaltung elektrisch parallel zum Speicherkondensator (86) geschaltet ist, wobei ein Verbindungspunkt der beiden abschaltbaren Halbleiterschalter (78, 80) eine Anschlussklemme (X2, X1) des zweipoligen Subsystems (76) bildet und wobei ein Pol des Speicherkondensators (86) eine weitere Anschlussklemme (X1, X2) dieses zweipoligen Subsystems (76) bildet.

12. Windenergiepark (2) nach Anspruch 11,
**dadurch gekennzeichnet, dass** als abschaltbarer Halbleiterschalter (78, 80) ein Insulated Gate Bipolar Transistor vorgesehen ist.

13. Windenergiepark (2) nach einem der Ansprüche 8 bis 12,
**dadurch gekennzeichnet, dass** ein generatorseitiger Stromrichter (20) einer jeden Windenergieanlage (4) zusammen mit einem korrespondierenden wechselspannungsseitigen Generator (16) jeweils in einer Gondel (12) einer Windenergieanlage (4) angeordnet sind.

14. Windenergiepark (2) nach einem der Ansprüche 8 bis 12,
**dadurch gekennzeichnet, dass** ein generatorseitiger Stromrichter (20) einer jeden Windenergieanlage (4) jeweils im Turm (14) einer Windenergieanlage (4) angeordnet ist , wogegen ein Generator (16) einer jeden Windenergieanlage (4) jeweils in einer Gondel (12) einer Windenergieanlage (4) angeordnet ist.

## Claims

1. Wind energy installation (4), consisting of a pod (12), which is arranged on a tower (14), having a rotor (28), a generator (16), a converter (20) on the generator side, a converter (22) on the grid side and a transformer (26), wherein these two converters (20, 22) are electrically connected to one another on the DC voltage side, and wherein the grid-side converter (22) is linked on the AC voltage side by means of the transformer (26) to a feed point (8) to an energy-receiving grid (6),
**characterized in that** each phase module (74) of the grid-side converter (22) has an upper and a lower valve branch (T1, T3, T5; T2, T4, T6), which have at least two two-pole subsystems (76) which are electrically connected in series, and
**in that** the generator-side converter (20) and the grid-side converter (22) are linked to one another on the DC voltage side by means of a direct-current cable (72).

2. Wind energy installation (4) according to Claim 1, **characterized in that** a diode rectifier is provided as the generator-side converter (20).

3. Wind energy installation (4) according to Claim 1, **characterized in that** each phase module (74) of the generator-side converter (20) has an upper and a lower valve branch (T1, T3, T5; T2, T4, T6) which have at least two two-pole subsystems (76) which are electrically connected in series.

4. Wind energy installation (4) according to one of the abovementioned claims,
**characterized in that** each two-pole subsystem (76) has two semiconductor switches (78, 80) which are electrically connected in series and can be turned off, and has an energy-storage capacitor (86), wherein this series circuit is connected electrically in parallel with the energy-storage capacitor (86) wherein a connecting point between the two semiconductor switches (78, 80) which can be turned off forms a connecting terminal (X2, X1) of the two-pole subsystem (76), and wherein one pole of the energy-storage capacitor (86) forms a further connecting terminal (X1, X2) of this two-pole subsystem (76).

5. Wind energy installation (4) according to Claim 4, **characterized in that** an insulated gate bipolar transistor (IGBT) is provided as the semiconductor switch (78, 80) which can be turned off.

6. Wind energy installation (4) according to one of the abovementioned claims,
**characterized in that** the grid-side converter (22) is arranged with the transformer (26) on the AC voltage side in the tower (14) of the wind energy installation (4).

7. Wind energy installation (4) according to one of Claims 1 to 5,
**characterized in that** the generator-side convertor (20) is arranged with the generator (16) on the AC voltage side in the pod (12) of the wind energy installation (4).

8. Wind farm (2) having at least two wind energy installations (4), which have a rotor (28), a generator (16), a generator-side converter (20) and having a grid-side converter station (48) which has a self-commutated converter (88) with a transformer (26) connected downstream on the AC voltage side, wherein these wind energy installations (4) and the grid-side converter station (48) are linked to one another on the DC voltage side,
**characterized in that** each phase module (76) of the self-commutated converter (88) in the grid-side converter station (48) has an upper and a lower valve branch (T1, T3, T5; T2, T4, T6), which have at least two two-pole subsystems (76) which are electrically connected in series, and **in that** the generator-side converter (20) and the self-commutated converter (88) for the grid-side converter station (48) are linked to one another by means of direct-current cables (72, 92).

9. Wind farm (2) according to Claim 8,
**characterized in that** a diode rectifier is in each case provided as the generator-side converter (22) of each wind energy installation (4).

10. Wind farm (2) according to Claim 8,
**characterized in that** each phase module (76) of a generator-side converter (20) of each wind energy installation (4) has an upper and a lower valve branch (T1, T3, T5; T2, T4, T6) which have at least two two-pole subsystems (76) which are electrically connected in series.

11. Wind farm (2) according to one of Claims 8 to 10,
**characterized in that** each two-pole subsystem (76) has two semiconductor switches (78, 80) which are electrically connected in series and can be turned off, and has an energy-storage capacitor (86), wherein this series circuit is connected electrically in parallel with the energy-storage capacitor (86) wherein a connecting point between the two semiconductor switches (78, 80) which can be turned off forms a connecting terminal (X2, X1) of the two-pole subsystem (76), and wherein one pole of the energy-storage capacitor (86) forms a further connecting terminal (X1, X2) of this two-pole subsystem (76).

12. Wind farm (2) according to Claim 11,
**characterized in that** an insulated gate bipolar transistor is provided as the semiconductor switch (78, 80) which can be turned off.

13. Wind farm (2) according to one of Claims 8 to 12,**characterized in that** a generator-side converter (20) of each wind energy installation (4) is in each case arranged together with a corresponding generator (16) on the AC voltage side in a pod (12) of a wind energy installation (4).

14. Wind farm (2) according to one of Claims 8 to 12,
**characterized in that** a generator-side converter (20) of each wind energy installation (4) is in each case arranged in the tower (14) of a wind energy installation (4), while in contrast a generator (16) of each wind energy installation (4) is in each case arranged in a pod (12) of a wind energy installation (4).

## Revendications

1. Eolienne ( 4 ) constituée d'une nacelle disposée sur une tour ( 14 ), comprenant un rotor ( 28 ), une génératrice ( 16 ), un convertisseur ( 20 ) de courant du côté de la génératrice, un convertisseur ( 22 ) de courant du côté du réseau et un transformateur ( 26 ), dans laquelle les deux convertisseurs ( 20, 22 ) de courant sont reliés entre eux électriquement du côté de la tension continue et dans laquelle le convertisseur ( 22 ) de courant du côté du réseau est combiné du côté de la tension alternative au moyen du transformateur ( 26 ) à un point ( 28 ) d'injection d'un réseau ( 6 ) absorbant de l'énergie,
**caractérisée en ce que** chaque module ( 74 ) de phase du convertisseur ( 22 ) de courant du côté du réseau comporte une branche ( T1, T3, T5 ; T2, T4, T6 ) de soupape supérieure et inférieure ayant au moins deux sous-systèmes ( 76 ) bipolaires montés électriquement en série, et
**en ce que** le convertisseur ( 20 ) de courant du côté de la génératrice et le convertisseur ( 22 ) de courant du côté du réseau sont combinés entre eux du côté de la tension continue au moyen d'un câble ( 72 ) de courant continu.

2. Eolienne ( 4 ) suivant la revendication 1,
**caractérisée en ce qu'**il est prévu comme convertisseur ( 20 ) de courant du côté de la génératrice un redresseur à diode.

3. Eolienne ( 4 ) suivant la revendication 1,
**caractérisé en ce que** chaque module ( 74 ) de phase du convertisseur ( 20 ) de courant du côté de la génératrice a une branche ( T1, T3, T5 ; T2, T4, T6 ) de soupape supérieure et inférieure ayant au moins deux sous-systèmes ( 76 ) bipolaires montés électriquement en série.

4. Eolienne ( 4 ) suivant l'une des revendications précédentes,
**caractérisée en ce que** chaque sous-système ( 76 ) bipolaire a deux commutateurs ( 78, 80 ) à semiconducteurs pouvant être ouverts et montés en série et un condensateur ( 86 ) accumulateur, ce circuit série étant monté électriquement en parallèle au condensateur ( 86 ) accumulateur, un point de liaison des deux commutateurs ( 78, 80 ) à semiconducteurs pouvant être ouverts formant une borne ( X2, X1 ) de connexion du sous-système ( 76 ) bipolaire et un pôle du condensateur ( 86 ) accumulateur formant une autre borne ( X1, X2 ) de connexion de ce sous-système ( 76 ) bipolaire.

5. Eolienne ( 4 ) suivant la revendication 4,
**caractérisée en ce qu'**il est prévu comme commutateurs ( 78, 80 ) à semiconducteurs pouvant être ouverts un transistor bipolaire à grille isolée ( IGBT ).

6. Eolienne ( 4 ) suivant l'une des revendications précédentes,
**caractérisée en ce que** le convertisseur ( 22 ) de courant du côté du réseau avec le transformateur ( 26 ) du côté de la tension alternative sont disposés dans la tour ( 14 ) de l'éolienne ( 4 ).

7. Eolienne ( 4 ) suivant l'une des revendications 1 à 5,
**caractérisée en ce que** le convertisseur ( 20 ) de courant du côté de la génératrice avec la génératrice ( 16 ) du côté de la tension alternative sont disposés dans la nacelle ( 12 ) de l'éolienne ( 4 ).

8. Parc ( 2 ) d'éoliennes ayant au moins deux éoliennes ( 4 ) qui ont respectivement un rotor ( 28 ), une génératrice ( 16 ), un convertisseur ( 20 ) de courant du côté de la génératrice, et comprenant un poste ( 48 ) de convertisseur de courant du côté du réseau, qui a un convertisseur ( 88 ) de courant à commutation automatique avec un transformateur ( 26 ) monté en aval du côté de la tension alternative, dans lequel ces éoliennes ( 4 ) et le poste ( 48 ) de convertisseur du courant du côté du réseau sont combinés entre eux du côté de la tension continue,
**caractérisé en ce que** chaque module (76) de phase du convertisseur ( 88 ) de courant à commutation automatique du poste ( 48 ) de convertisseur de courant du côté du réseau comporte une branche ( T1, T3, T5 ; T2, T4, T6 ) de soupape supérieure et inférieure ayant au moins deux sous-systèmes ( 76 ) bipolaires montés électriquement en série et **en ce que** le convertisseur ( 20 ) de courant du côté de la génératrice et le convertisseur ( 88 ) de courant à commutation automatique du poste ( 48 ) de convertisseur de courant du côté du réseau sont combinés entre eux au moyen d'un câble ( 72, 92 ) de courant continu.

9. Parc ( 2 ) d'éoliennes suivant la revendication 8,
**caractérisé en ce qu'**il est prévu comme convertisseur ( 20 ) de courant du côté de la génératrice un redresseur à diode.

10. Parc ( 2 ) d'éoliennes suivant la revendication 8,
**caractérisé en ce que** chaque module ( 76 ) de phase d'un convertisseur ( 20 ) de courant du côté de la génératrice de chaque éolienne ( 4 ) a une branche ( T1, T3, T5 ; T2, T4, T6 ) de soupape supérieure et inférieure ayant au moins deux sous-systèmes ( 76 ) bipolaires montés électriquement en série.

11. Parc ( 2 ) d'éoliennes suivant l'une des revendications 8 à 10,
**caractérisé en ce que** chaque sous-système ( 76 ) bipolaire a deux commutateurs ( 78, 80 ) à semiconducteurs pouvant être ouverts et montés en série et un condensateur ( 86 ) accumulateur, ce circuit série étant monté électriquement en parallèle au condensateur ( 86 ) accumulateur, un point de liaison des deux commutateurs ( 78, 80 ) à semiconducteurs pouvant être ouverts formant une borne ( X2, X1 ) de connexion du sous-système ( 76 ) bipolaire et un pôle du condensateur ( 86 ) accumulateur formant une autre borne ( X1, X2 ) de connexion de ce sous-système ( 76 ) bipolaire.

12. Parc ( 2 ) d'éoliennes suivant la revendication 11,
**caractérisé en ce qu'**il est prévu comme commutateurs ( 78, 80 ) à semiconducteurs pouvant être ouverts un transistor bipolaire à grille isolée ( IGBT ).

13. Parc ( 2 ) d'éoliennes suivant l'une des revendications 8 à 12,
**caractérisé en ce qu'**un convertisseur ( 20 ) de courant du côté de la génératrice de l'une de chaque éolienne ( 4 ) ensemble avec la génératrice ( 16 ) correspondante du côté de la tension alternative sont disposés respectivement dans une nacelle ( 12 ) d'une éolienne ( 4 ).

14. Parc ( 2 ) d'éoliennes suivant l'une des revendications 8 à 12,
**caractérisé en ce qu'**un convertisseur ( 20 ) de courant du côté de la génératrice de l'une de chaque éolienne ( 4 ) est disposé respectivement dans la tour ( 14 ) d'une éolienne ( 4 ), tandis qu'une génératrice de l'une de chaque éolienne est disposée respectivement dans une nacelle ( 12 ) d'une éolienne ( 4 ).
